# EUROPEAN PATENT SPECIFICATION

(11) **EP 4 338 928 B1**
(45) Date of publication and mention of the grant of the patent: **18.12.2024**
(21) Application number: 23192982.9
(22) Date of filing: 23.08.2023
(51) Int. Cl.: B29C 48/25, B29C 48/00, B29C 48/265, B29C 48/30

(54) **EXTRUDER HEAD ASSEMBLY WITH QUICK RELEASE DEVICE OF THE EXTRUSION LINE**
EXTRUDERKOPFANORDNUNG MIT SCHNELLLÖSEVORRICHTUNG DER EXTRUSIONSLINIE
ENSEMBLE TÊTE D'EXTRUDEUSE AVEC DISPOSITIF DE LIBÉRATION RAPIDE DE LA LIGNE D'EXTRUSION

(30) Priority: 29.08.2022 IT 202200017724
(43) Date of publication of application: 20.03.2024
(73) Proprietor: S.T. Soffiaggio Tecnica Srl, 20900 Monza (Monza Brianza) (MC) (IT)
(72) Inventor: ROTOLO, VLADIMIRO, 20900 MONZA (MONZA BRIANZA) (IT)
(74) Representative: Forattini, Amelia

(56) References cited:
- FR-A1- 3 038 862
- US-A- 2 991 504
- US-A1- 2012 313 280
- US-A1- 2017 291 364
- US-A1- 2020 101 653

## Description

The present invention relates to an extruder head assembly with a quick release device of the extrusion line.

In the extrusion process, the extrusion line is a nozzle in which the molten or solution polymer is extruded.

US2020101653A1 discloses an extruder having an extruder crosshead, a die, and a die retaining assembly. The extruder crosshead has an annular major surface while the die has a first die surface facing and conformal to that major surface. The die also has a second die surface opposed to the first die surface. The die-retaining assembly is attached to the extruder crosshead, evenly and variably pressing the second die surface with controlled pressure such that the substantially opposing first die surface is pressed into the major surface of the extruder crosshead. The die-retaining also includes movable elements which abut the die in order to move the die.

US2017291364A1 discloses a single screw micro-extruder for a 3D printer including a feed chamber with an opening for receiving solid plastic pellets. An extrusion barrel extends from the feed chamber and has an inner conically shaped bore between input and output ends. The bore has a mouth at the input end and an exit opening at the output end with a melt section therebetween. A rotatable screw is attached to a torque drive of the printer, and extends through the feed chamber and conical bore of the barrel. A constant or tapered diameter of the screw root core, from the input end toward the output end of the barrel, forms a decreasing channel root depth in a helical path for compression between a root core surface and an inner surface of the bore for pressurizing melt in the melt section of the barrel to exit an extrusion nozzle.

US2991504A discloses an adjustable extrusion die mounted in a die holder, the latter being adapted to be removed from and subsequently reinserted into the head structure of an extruder in a definite orientation once the initial adjustment of the die on the die holder has been made to obtain a concentric extrusion about the article. A laterally movable die is supported in a removably fixed die holder having a base and head member positioned about an extrusion core tube. The die is adjusted by two pairs of opposing adjusting screws extending through the head member which is secured to an inner boss of the base member. A clamp ring locks an outer boss of the holder to the extruder to hold the die and die holder in position. The die and holder are removed from the extruder without disturbing the die adjustment by unscrewing the clamp ring and pulling the base member outwardly from the extruder.

The present invention aims at making an extruder head assembly with a quick release device of the extrusion line which allows quickly and easily disassembling and reassembling the extrusion line.

This object and others which are more apparent below are achieved by an extruder head assembly as claimed in the appended claims.

Further features and advantages will become apparent from the description of preferred, but not exclusive, embodiments of the invention, illustrated by way of nonlimiting example in the accompanying drawings, in which:

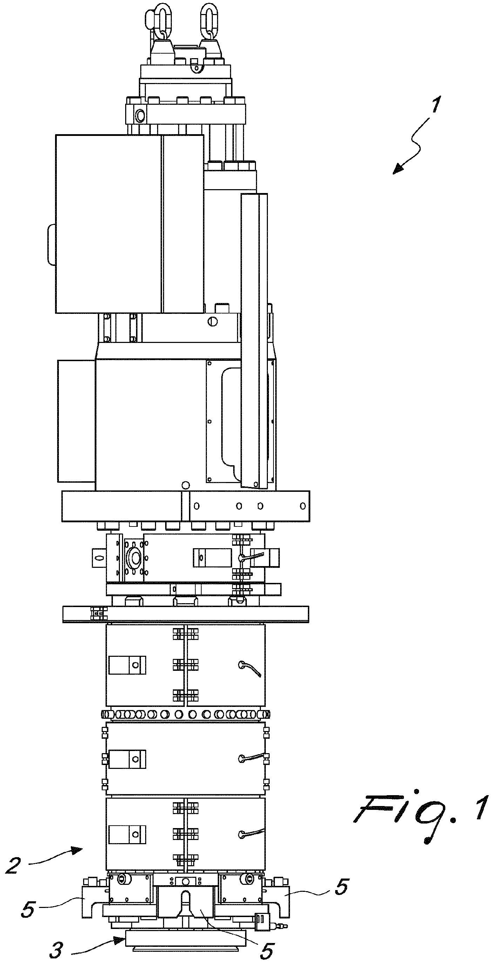

Figure 1 is a front view of an extruder head having a quick release device of the extrusion line, according to the invention;

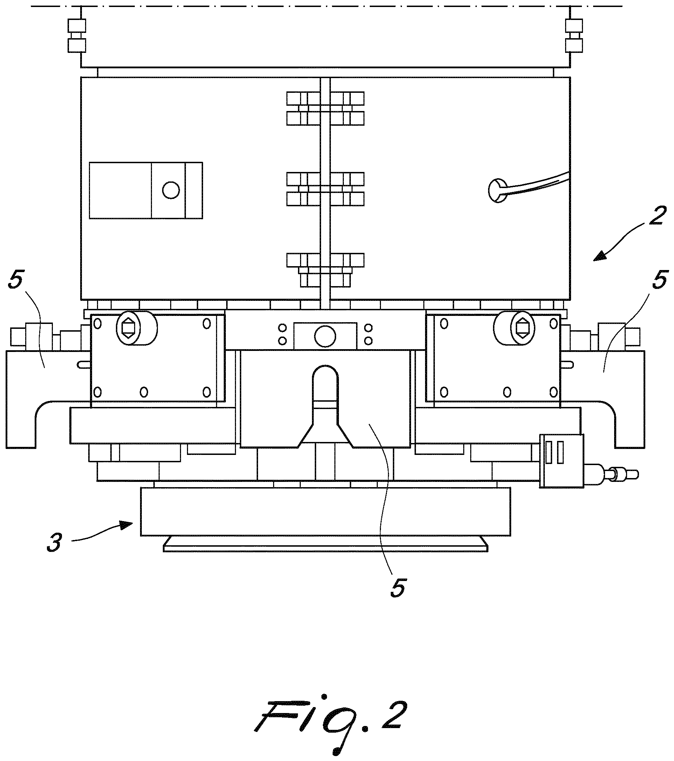

Figure 2 is an enlarged view of the lower part of the extruder head;

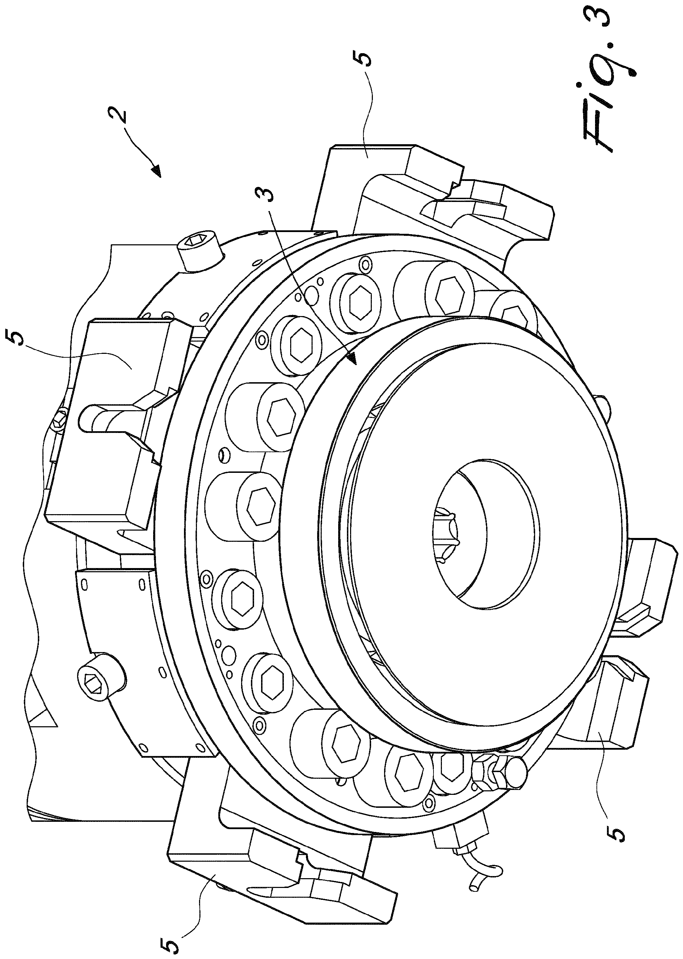

Figure 3 is a bottom view of the extrusion line;
Figure 4 is a partial section view showing the dowels locking the extrusion line in the working step;
Figure 5 is a partial section view, similar to the preceding one, showing the step wherein the dowels release the extrusion line in the change step;
Figure 6 is a partial section view, similar to the preceding one, showing the extraction step of the extrusion line of the extruder head;
Figure 7 is a perspective view of the operating apparatus configured to act on the dowels to release the extrusion line;
Figure 8 is a perspective view of the operating apparatus in inserted position in the extruder head;
Figure 9 is a sectional partial section view detailing the various components of the operating apparatus, including the screwdriver which allows the unscrewing/screwing of the locking male threaded flange.

With reference to the figures, the assembly according to the invention, indicated as a whole by reference numeral 1, comprises an extruder head 2 having an extrusion line 3.

The extrusion line 3 is inserted in a cylindrical seat 4 formed in the extruder head 2 which has locking means 5 configured to hold the extrusion line 3 in a working position. According to the invention, the locking means 5 is actuated to free the extrusion line 3 and allow the extraction thereof from seat 4.

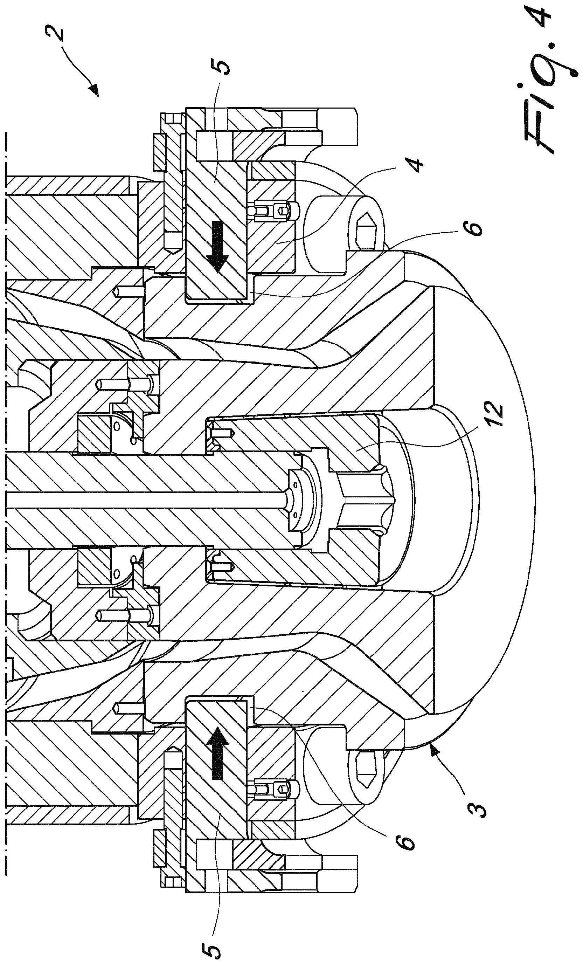

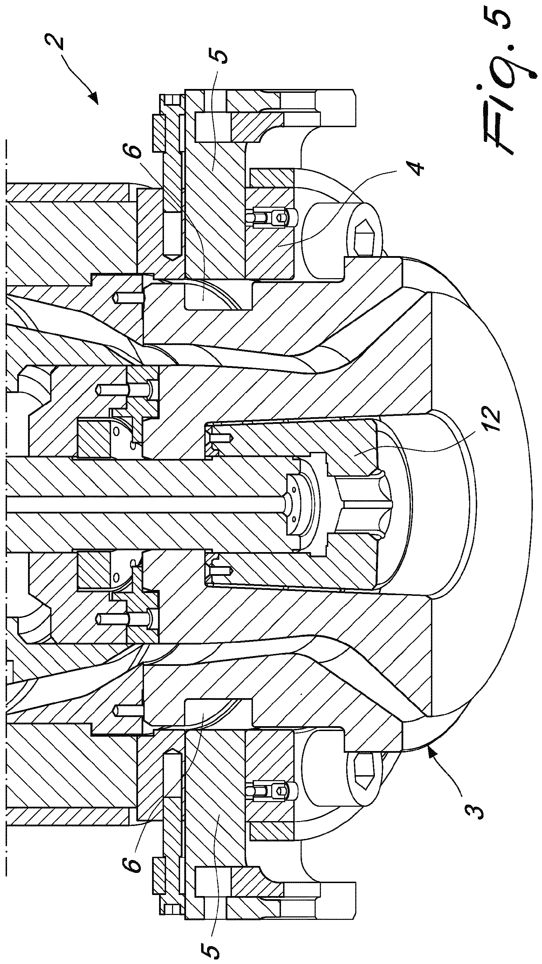

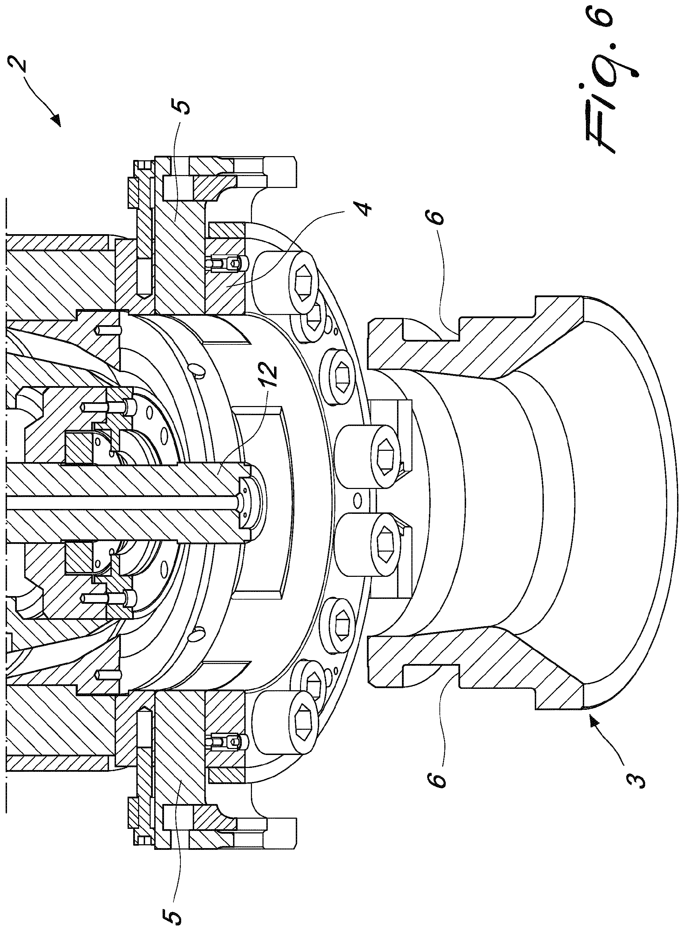

According to a preferred embodiment of the invention, the locking means are dowels 5 radially movable between a locking position, shown in Figure 4, and a release position, shown in Figures 5 and 6, which allows the extraction of the extrusion line 3.

In the locking position, the dowels 5 engage an annular recess 6 formed in the extrusion line 3.

In the embodiment herein shown, there are four dowels 5 arranged at 90° with respect to one another. In other cases of smaller or larger extruder heads, the number of dowels varies, for example from 2 to 8.

According to a further aspect of the invention, the assembly comprises an operating apparatus, indicated as a whole by reference numeral 10, configured to act on the dowels 5 to release the extrusion line 3.

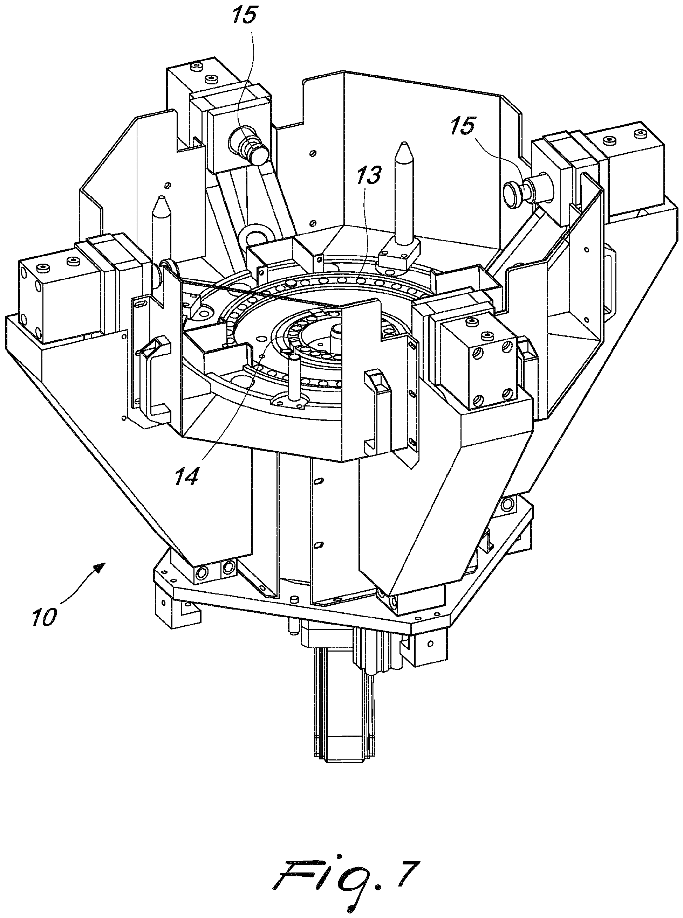

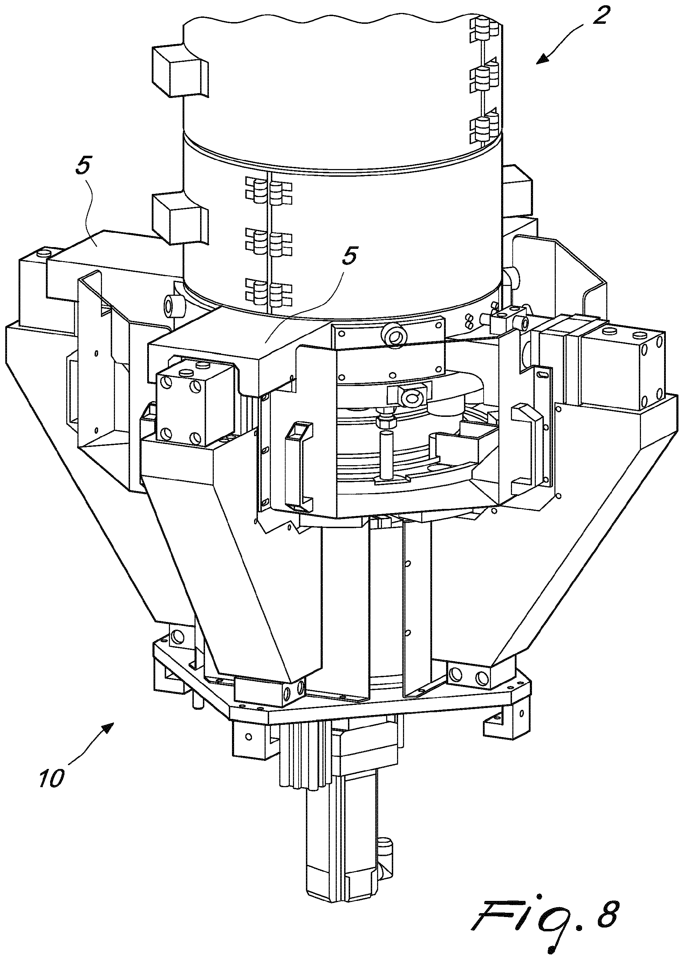

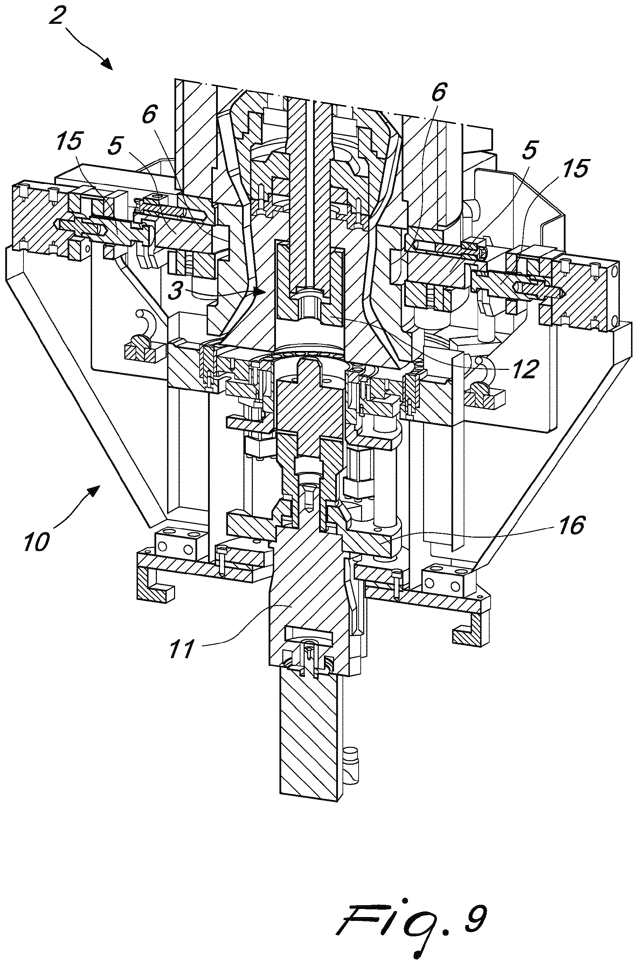

The operating apparatus 10 is shown in Figures 7 to 9.

The operating apparatus 10 comprises a screwdriver 11 which allows the unscrewing/screwing of a female threaded flange 12 or in other cases, the male threaded flange itself.

The screwdriver is installed on a movable table 16 which allows the retraction in the unscrewing step and the advancement in the screwing step of the screwdriver itself.

The operating apparatus 10 further comprises two movable tables provided with magnets adapted to fasten and remove the male threaded flange and extrusion line.

More particularly, the operating apparatus comprises an extrusion line movable table 13 and a male threaded flange movable table 14, which are illustrated in Figure 7.

The dowels 5 are actuated by means of unlocking pins 15, which are mounted on the operating apparatus at the pins themselves.

It was ascertained how the invention achieves the aim and the preset objects.

## Claims

1. An extruder head assembly (1), comprising an extruder head (2) having an extrusion line (3);
said extrusion line being inserted in a cylindrical seat (4) formed in said extruder head;
said extruder head comprising a locking means (5) configured to hold said extrusion line in a working position; said locking means being actuated for releasing said extrusion line and
allowing the extraction of said extrusion line from said seat; said extruder head assembly being **characterized in that** said locking means (5) comprises dowels that are radially movable between a locking position and a release position, said release position allowing the extraction of said extrusion line.

2. The extruder head assembly, according to claim 1, **characterized in that**, in said locking position, said dowels engage a respective annular recess (6) formed in said extrusion line.

3. The extruder head assembly, according to one or more of the preceding claims, **characterized in that** said locking means comprises four dowels arranged at 90° relative to one another.

4. The extruder head assembly, according to one or more of the preceding claims, **characterized in that** it comprises an operating apparatus (10) that operates said dowels in order to release said extrusion line.

5. The extruder head assembly, according to claim 4, **characterized in that** said operating apparatus comprises a screwdriver (11) that allows the unscrewing/screwing of a female threaded flange (12).

6. The extruder head assembly, according to claim 4, **characterized in that** said operating apparatus comprises a screwdriver that allows the unscrewing/screwing of a male threaded flange (12)

7. The extruder head assembly, according to claim 4, **characterized in that** said operating apparatus comprises two movable tables (13) provided with magnets adapted to fasten and extract said male threaded flange and said extrusion line.

8. The extruder head assembly, according to claim 4, **characterized in that** said operating apparatus comprises an extrusion line movable table (13) and a male threaded flange movable table (14).

9. The extruder head assembly, according to claim 4, **characterized in that** said operating apparatus comprises unlocking pins (15); said dowels being driven by means of said unlocking pins.

## Patentansprüche

1. Eine Extruderkopfanordnung (1), die einen Extruderkopf (2) umfasst, der eine Extrusionslinie (3) hat; wobei die Extrusionslinie in einen zylindrischen Sitz (4) eingesetzt ist, der in dem Extruderkopf geformt ist;
wobei der Extruderkopf ein Verriegelungsmittel (5) umfasst, ausgebildet, um die Extrusionslinie in einer Arbeitsposition zu halten; wobei das Verriegelungsmittel betätigt wird, um die Extrusionslinie zu lösen und das Herausziehen derselben aus dem Sitz zu ermöglichen; wobei die Extruderkopfanordnung **dadurch gekennzeichnet ist, dass** das Verriegelungsmittel (5) Dübel umfasst, die radial zwischen einer Verriegelungsposition und einer Lösungsposition beweglich sind, wobei die Lösungsposition das Herausziehen der Extrusionslinie ermöglicht.

2. Die Extruderkopfanordnung gemäß Anspruch 1, **dadurch gekennzeichnet, dass** in der Verriegelungsposition die Dübel in eine entsprechende ringförmige Vertiefung (6) eingreifen, die in der Extrusionslinie geformt ist.

3. Die Extruderkopfanordnung gemäß einem oder mehreren der obigen Ansprüche, **dadurch gekennzeichnet, dass** das Verriegelungsmittel vier Dübel, angeordnet in einem Winkel von 90° zueinander, umfasst.

4. Die Extruderkopfanordnung gemäß einem oder mehreren der obigen Ansprüche, **dadurch gekennzeichnet, dass** sie eine Betätigungsvorrichtung (10) umfasst, welche die Dübel betätigt, um die Extrusionslinie zu lösen.

5. Die Extruderkopfanordnung gemäß Anspruch 4, **dadurch gekennzeichnet, dass** die Betätigungsvorrichtung einen Schraubendreher (11) umfasst, der das Einschrauben/Herausschrauben eines Innengewindeflanschs (12) ermöglicht.

6. Die Extruderkopfanordnung gemäß Anspruch 4, **dadurch gekennzeichnet, dass** die Betätigungsvorrichtung einen Schraubendreher umfasst, der das Einschrauben/Herausschrauben eines Außengewindeflanschs (12) ermöglicht.

7. Die Extruderkopfanordnung gemäß Anspruch 4, **dadurch gekennzeichnet, dass** die Betätigungsvorrichtung zwei bewegliche Platten (13) umfasst, ausgestattet mit Magneten, die ausgebildet sind, um den Außengewindeflansch und die Extrusionslinie herauszuziehen.

8. Die Extruderkopfanordnung gemäß Anspruch 4, **dadurch gekennzeichnet, dass** die Betätigungsvorrichtung eine bewegliche Extrusionslinienplatte (13) und eine bewegliche Außengewindeflanschplatte (14) umfasst.

9. Die Extruderkopfanordnung gemäß Anspruch 4, **dadurch gekennzeichnet, dass** die Betätigungsvorrichtung Entriegelungsstifte (15) umfasst, wobei die Dübel mit Hilfe der Entriegelungsstifte getrieben werden.

## Revendications

1. Ensemble de tête d'extrudeuse (1), comprenant une tête d'extrudeuse (2) ayant une ligne d'extrusion (3); ladite ligne d'extrusion étant insérée dans un siège cylindrique (4) formé dans ladite tête d'extrudeuse; ladite tête d'extrudeuse comprenant un moyen de verrouillage (5) configuré pour maintenir ladite ligne d'extrusion dans une position de travail ; ledit moyen de verrouillage étant actionné pour libérer ladite ligne d'extrusion et permettre l'extraction de ladite ligne d'extrusion dudit siège ; ledit ensemble de tête d'extrudeuse étant **caractérisé en ce que** ledit de verrouillage (5) comprend des chevilles mobiles radialement entre une position de verrouillage et une position de libération, ladite position de libération permettant l'extraction de ladite ligne d'extrusion.

2. Ensemble de tête d'extrudeuse selon la revendication 1, **caractérisé en ce que**, dans ladite position de verrouillage, lesdites chevilles s'engagent dans un évidement annulaire correspondant (6) formé dans ladite ligne d'extrusion.

3. Ensemble de tête d'extrudeuse selon une ou plusieurs des revendications précédentes, **caractérisé en ce que** lesdits moyens de verrouillage comprennent quatre chevilles disposées à 90° les unes par rapport aux autres.

4. Ensemble de tête d'extrudeuse selon une ou plusieurs des revendications précédentes, **caractérisé en ce qu'**il comprend un appareil de commande (10) qui actionne lesdites chevilles afin de libérer ladite ligne d'extrusion.

5. Ensemble de tête d'extrudeuse selon la revendication 4, **caractérisé en ce que** ledit appareil d'actionnement comprend un tournevis (11) qui permet le dévissage/vissage d'une bride filetée femelle (12).

6. Ensemble de tête d'extrudeuse selon la revendication 4, **caractérisé en ce que** ledit appareil d'actionnement comprend un tournevis qui permet le dévissage/vissage d'une bride filetée mâle (12).

7. Ensemble de tête d'extrudeuse selon la revendication 4, **caractérisé en ce que** ledit appareil d'actionnement comprend deux tables mobiles (13) munies d'aimants adaptés pour fixer et extraire ladite bride filetée mâle et ladite ligne d'extrusion.

8. Ensemble de tête d'extrudeuse selon la revendication 4, **caractérisé en ce que** ledit appareil d'actionnement comprend une table mobile de ligne d'extrusion (13) et une table mobile de bride filetée mâle (14).

9. Ensemble de tête d'extrudeuse selon la revendication 4, **caractérisé en ce que** ledit appareil d'actionnement comprend des goupilles de déverrouillage (15); lesdites chevilles étant entraînées au moyen desdites goupilles de déverrouillage.
